# EUROPÄISCHE PATENTSCHRIFT

(11) **EP 0 808 657 B1**
(45) Veröffentlichungstag und Bekanntmachung des Hinweises auf die Patenterteilung: **26.06.2002**
(21) Anmeldenummer: 97105840.9
(22) Anmeldetag: 09.04.1997
(51) Int. Cl.: B01L 7/00, F24F 6/04, C12M 1/00, G01N 17/00, B01L 1/00

(54) **Einrichtung zur Befeuchtung des Nutzraumes eines Klimaschrankes**
Device for humidifying the working space of an incubator
Dispositif pour humidifier l'espace utile d'un incubateur

(30) Priorität: 22.05.1996 DE 19620507
(43) Veröffentlichungstag der Anmeldung: 26.11.1997
(73) Patentinhaber: KENDRO Laboratory Products GmbH, 63450 Hanau (DE)
(72) Erfinder: Kaus, Thomas, 63505 Langenselbold (DE); Hessler, Karl-Heinz, 63776 Mömbris (DE); Ferger, Stefan, 63631 Ranstadt (DE); Heeg, Hubert, 63776 Mömbris (DE)
(74) Vertreter: Lang, Friedrich

(56) Entgegenhaltungen:
- EP-A- 0 581 462
- WO-A-94/29650
- US-A- 4 614 299
- US-A- 4 622 049
- US-A- 4 921 642
- US-A- 4 961 493
- PATENT ABSTRACTS OF JAPAN vol. 095, no. 004, 31.Mai 1995 -& JP 07 004701 A (JAPAN GORE TEX INC;OTHERS: 01), 10.Januar 1995,

## Beschreibung

Die Erfindung betrifft eine Einrichtung zur Befeuchtung des Nutzraumes eines Klimaschrankes, wobei die Befeuchtungseinrichtung einen von wasserdichten Behälterwänden begrenzten, allseitig geschlossenen Behälter zur Aufnahme von Wasser aufweist, der mindestens teilweise aus wasserdampfdurchlässigem, aber gegenüber flüssigem Wasser dichtem Material gebildet ist.

Üblicherweise sind Klimaschränke, z. B. Brut- oder Begasungsbrutschränke der verschiedenen Baureihen, wie sie z. B. im Prospektmaterial der Firma Heraeus Instruments GmbH beschrieben sind, zur Konstantbefeuchtung der Nutzraumatmosphäre bei etwa 95 % relativer Feuchte mit einer offenen Wanne ausgestattet, die einen Wasservorrat hält. Den in derartigen Brutschränken "in vitro" wachsenden Zell- und Gewebekulturen werden bei Temperaturen von z. B. 37°C möglichst natürliche Umgebungsbedingungen simuliert. Kontaminationen durch Pilze, Bakterien oder Mykoplasmen sind unbedingt zu vermeiden, da sie wertvolle Kulturen vernichten oder zu falschen Untersuchungsergebnissen führen können. Offene Befeuchtungseinrichtungen stellen daher immer eine potentielle Kontaminationsquelle dar, die nur durch aufwendige Reinigungsprozeduren unter Kontrolle zu halten ist. Beim Ausbau der Wasserbehälter, oder beim Befüllen kann es außerdem leicht zum Verschütten von Wasser kommen, was anschließend wieder aufgetrocknet werden muß. Die Nutzraumwände selbst sollen möglichst trockengehalten werden, um eventuelle Verschmutzungs- und Kontaminationsherde auszuschließen.

Die übliche Befeuchtungseinrichtung mit offenem Wasserbehälter ist durch ihre Abmessungen einer bestimmten Nutzraumgröße zugeordnet. Die Wasserbehälter können nicht ohne weiteres an anderer Stelle als konstruktiv vorgesehen plaziert werden. Dies kann im Einzelfall bedeuten, daß die Zellkulturen nicht optimal befeuchtet werden. Zusätzliche Wasserbehälter können zwar in den Klima- oder Brutschrank gestellt werden, sie verringern aber gleichzeitig das nutzbare Volumen für die Kulturgefäße. Darüber hinaus ist die freie Wasseroberfläche durch die Konstruktion des Behälters natürlich begrenzt. Eine große Oberfläche zum Verdampfen des Wassers ist aber zur Erhöhung der Effizienz der Befeuchtungseinrichtung wünschenswert.

Ein wannenförmiger Behälter, dessen Öffnung von einer wasserdampfdurchlässigen Membran überspannt wird, ist auch aus DE 36 41 821 A 1 bekannt. Der Behälter dient hier als Feuchtequelle für ein Meßverfahren zur Prüfung der Wasserdampfdurchlässigkeit von Materialien. Die Messung erfolgt in einem Klimaschrank. Wie im vorgenannten Stand der Technik weist diese Befeuchtungsvorrichtung ebenfalls die Nachteile einer wenig variabel einsetzbaren Wanne mit relativ hohem Platzbedarf, kleiner Oberfläche, die Wasserdampf abgeben kann und mit aufwendiger Gestaltung hinsichtlich des Verschlußes und der Fixierung der Membran auf.

In US 4,622,049 ist eine Zweikammer-Testvorrichtung mit einem in der unteren Kammer befindlichen Vorratsbehälter für eine gesättigte, wässrige Salzlösung offenbart. Auch in diesem Fall besteht die Befeuchtungseinrichtung aus einer festen Wanne, wobei ein kleiner Teil ihrer der zweiten, oberen Kammer zugewandten Oberfläche mit einer wasserdampfdurchlässigen Membran bzw. mit Glaswolle versehen ist. Die Abmessungen von oberer und unterer Kammer sind so aufeinander abgestimmt, daß sie formschlüssig aneinander zu koppeln sind und die Vorrichtung somit als Gesamtsystem zu verstehen ist. Damit stellt auch diese Vorrichtung nur eine weitere Variante des bereits geschilderten, allgemeinen Standes der Technik dar (fester Wasserbehälter/Wanne).

Weiterhin ist aus WO 94/29650 ein Luftbefeuchtungssystem für Klimaanlagen bekannt, das einen Teil mit wasserdampfdurchlässigen Membranen aufweist. Die Membranen sind in einem festen Rahmen gespannt, wobei das Wasser zwischen zwei als Filter gegenüber Mikroben, Partikeln und gelösten Salzen aufzufassenden Membranen geleitet wird. Der Wasservorratsbehälter ist separat und über ein Leitungssystem mit dem Membranrahmen verbunden. Das als Membranzelle ausgebildete Teil wird an zwei Seiten von Membranen begrenzt. Der Rahmen und die Spannung der Membranen geben der gesamten Konstruktion eine starre Form, so daß auch hier ein fester Behälter mit den bekannten Nachteilen angegeben ist.

Ein sogenannter Aromabeutel ist aus US 4,961,493 bekannt. Hierbei wird eine flüssige oder gelförmige, Aroma- oder Duftstoffe enthaltende Substanz in einem gasdurchlässigen, aber flüssigkeitsundurchlässigen Beutel gehalten. Der Beutel ist nicht zerstörungsfrei wiederzubefüllen und ist bei einer Temperatur von etwa 25°C für die Beeinflussung des Raumklimas in Wohnräumen oder Fahrzeuginnenräumen vorgesehen, wo es hinsichtlich Sterilität oder Autoklavierbarkeit keine hohen Anforderungen gibt. Das Behältnis ist als Einwegartikel ausgebildet, der nach einiger Zeit seine Funktion als Quelle von gasförmigen Aromastoffen verliert und, da nicht wiederbefüllbar, durch einen neuen Aromabeutel ersetzt werden muß. Dieser Beutel ist für einen Einsatz in definierter Atmosphäre, wie sie in Klimaschränken erforderlich ist, völlig ungeeignet.

Demgegenüber liegt der Erfindung die Aufgabe zugrunde, eine Einrichtung zur Befeuchtung von Klimaschränken anzugeben, die das Kontaminationsrisiko minimiert, mit hoher Effizienz arbeitet und für unterschiedliche Nutzraumbedingungen geeignet ist.

Diese Aufgabe wird erfindungsgemäß dadurch gelöst, daß der Behälter als flexibler, durch einen Verschluß wiederbefüllbarer Beutel ausgebildet ist, wobei mindestens der wasserdampfdurchlässige Teil des flexiblen Beutels eine gegenüber einer glatten, unstrukturierten Oberfläche vergrößerte Oberfläche aufweist. Das Befüllen des flexiblen Beutels erfolgt bevorzugt außerhalb des Klimaschrankes, so daß auch durch Verschütten kein potentieller Verschmutzungsherd im oder am Klimaschrank zu befürchten ist. Der Beutel weist einen leicht zu öffnenden und zu schließenden, dichten Verschluß auf. Dieser kann als Kappe, Stopfen, Drehverschluß oder als Kombination davon ausgeführt sein. Die Porosität der wasserdampfdurchlässigen Membran ist so ausgelegt, daß ebenso wie bei den bekannten offenen Befeuchtungseinrichtungen die erforderliche relative Feuchte in kurzer Zeit erreicht wird. Dies gelingt, indem der Beutel aus einer beispielsweise durch Noppen an der Oberfläche strukturierten, wasserdampfdurchlässigen Membran gebildet wird. Auf diese Weise wird die Fläche, aus der der Wasserdampf austritt, bezogen auf die zu verdunstende Wassermenge, maximiert.

Eine weitere Steigerung der Verdunstungsoberfläche wird durch zusätzliche Steppnähte erreicht. Letztere bewirken darüber hinaus eine Formstabilisierung des Beutels, so daß er in flacher, matratzenähnlicher Form in den Nutzraum des Klimaschrankes gelegt oder gehängt werden kann. Eine derartige Formstabilisierung kann durch das Verbinden (Steppen, Schweißen, Kleben oder ähnliches) gegenüberliegender Flächen des Beutels durch das Beutelinnere hindurch erfolgen. Darüber hinaus kann auch das Einfügen einer, insbesondere durch Steppunkte fixierten, steifen Kunststoffeinlage in das Innere des Beutels zur Formstabilisierung beitragen. Durch die vielfältigen Formen, die mit dieser Befeuchtungseinrichtung verwirklicht werden können, ist es möglich für unterschiedliche geometrische Bedingungen im Nutzraum des Klimaschranks die jeweils optimale Form zu verwenden.

Beispielsweise kann eine Zellkultur schnell und dauerhaft einen hohen Feuchtegrad erfordern. Dies bedeutet nach dem Stand der Technik einen großen Wasserbehälter mit möglichst großer, offener Verdunstungsfläche, die wiederum, je länger sie in Funktion ist, als Kontaminationsrisiko anzusehen ist. Abgesehen davon erfordern derartige großvolumige, offene Behälter einen entsprechend großen Klimaschrank. Mit der erfindungsgemäßen Befeuchtungsvorrichtung dagegen kann ein in seinen äußeren Abmessungen kleiner Beutel durch geeignete Formgebung und Oberflächenprofilierung bei relativ großem Fassungsvermögen in einen kleinen Klima- oder Brutschrank gelegt oder gehängt werden und somit gegenüber dem herkömmlichen System einen größeren Wirkungsgrad bezüglich der Befeuchtung erzielen.

Als wasserdampfdurchlässiges aber flüssigkeitsdichtes Material hat sich ein modifiziertes Teflon (FEP) als vorteilhaft erwiesen. Die Verarbeitung durch Schweißen, Steppen, Prägen oder ähnlichem ist bei diesem Material leicht möglich. Das Material widersteht darüber hinaus wiederholt die Beaufschlagung mit hohem Wasserdampfdruck bei cirka 140°C, wie es üblicherweise in Sterilisierautoklaven vorkommt. Alternativ kann auch Polypropylen (PP) als Behältermaterial verwendet werden.

Ausführungsbeispiele der Erfindung werden nachfolgend anhand von Zeichnungen erläutert:

Dabei zeigt:
- Figur 1:: einen einfachen Befeuchtungsbeutel ohne Versteifungen,
- Figur 2:: eine perspektivische Darstellung eines Befeuchtungsbeutels mit linienförmigen, durchgehenden Steppnähten,
- Figur 3:: einen mit Aufhängeösen versehenen Befeuchtungsbeutel mit linienförmigen oder punktuellen Steppungen,
- Figur 4:: eine Anordnung der Befeuchtungseinrichtung im Nutzraum eines Klimaschrankes.

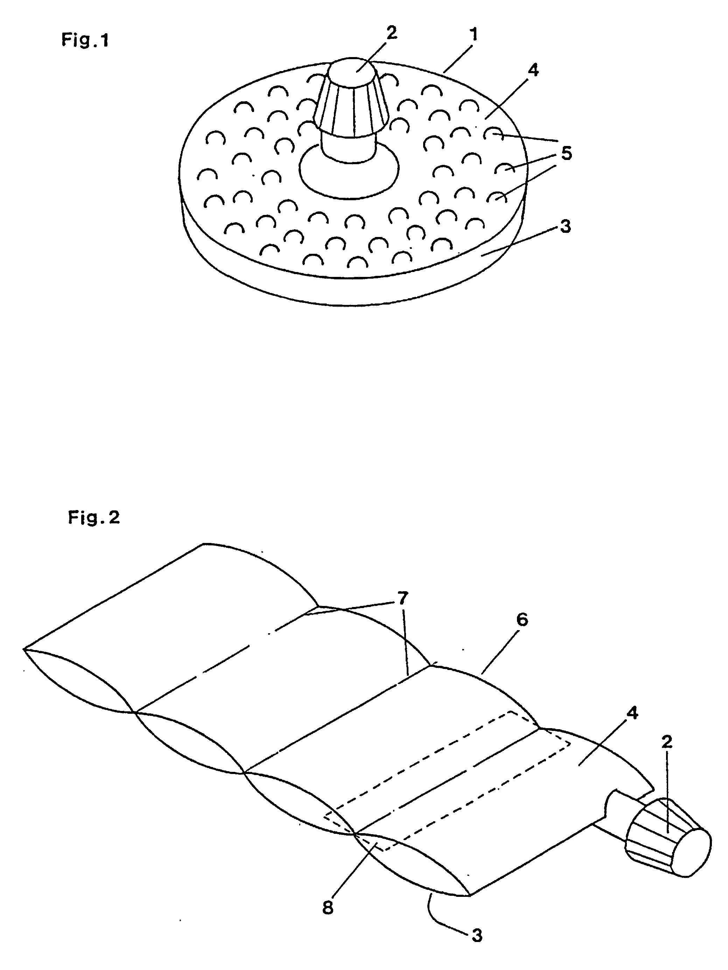

In Figur 1 wird ein runder Beutel 1 gezeigt, der oben in der Mitte einen Schraubverschluß 2 aufweist. Abgesehen von diesem Verschluß 2 hat der Beutel 1 keine Versteifungselemente, so daß er nach Befüllen mit Wasser eine ballonartige Form annimmt. Wird der Beutel nicht maximal mit Wasser gefüllt, so bleibt er besonders flexibel und damit an äußere Formen anpassungsfähig, wie sie durch die Nutzraumgeometrie des Klimaschrankes oder/und durch die Anordnung der Kulturgefäße und/oder durch zusätzliche Stützelemente darin vorgegeben werden.

Der Beutel 1 kann im ganzen aus wasserdampfdurchlässigem, aber flüssigkeitsdichtem Material gebildet sein. Ebenso kann es auch sinnvoll sein, die Auflagefläche 3 des Beutels 1 aus einem flexiblen oder versteiften wasserdampf- und flüssigkeitsundurchlässigen Material vorzusehen, das mit dem erfindungsgemäßen wasserdampfdurchlässigen, aber flüssigkeitsdichten Material als Oberteil 4 des Beutels 1 verschweißt wird. Bei dieser Ausführungsform ist außerdem das wasserdampfdurchlässige Oberteil 4 des Beutels 1 mit nach außen gerichteten Noppen 5 zur Vergrößerung der Oberfläche versehen.

In Figur 2 ist ein rechteckiger, flacher Befeuchtungsbeutel 6 dargestellt, der durch linienförmige durchgehende Steppnähte 7 in eine matratzenähnliche Form gebracht ist. Die Steppnähte 7 verbinden Ober- und Unterseite 4,3 des Beutels 6 und geben ihm dadurch eine versteifte Form. An einer Ecke des Beutels 6 ist ein Kappenverschluß 2 zum Befüllen des Beutels mit Wasser angebracht. Wie im ersten Beispiel kann der Beutel 6 insgesamt aus wasserdampfdurchlässigem, aber für flüssiges Wasser dichtem Material bestehen. Ebenso kann aber auch nur die Oberseite 4 aus diesem Material gebildet werden. Ist die Versteifung durch die Steppnähte 7 allein nicht ausreichend, so können die Steppungen 7 zusätzlich mit einer Zwischenlage 8, z. B. aus steifer Kunststoffolie, unterlegt werden.

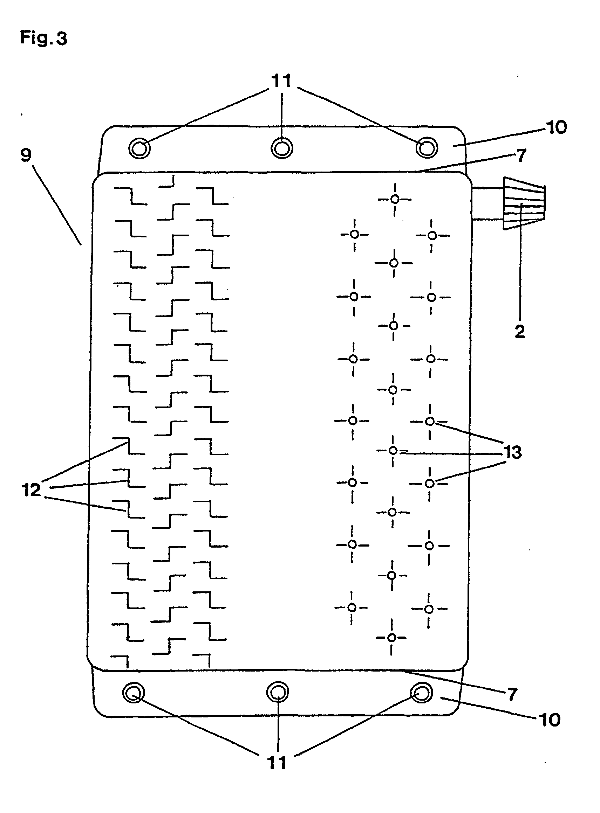

Ein Ausführungsbeispiel für einen aufhängbaren Befeuchtungsbeutel 9 zeigt Figur 3. An zwei Seiten des in seiner Grundform rechteckigen Beutels 9 steht je eine Randpartie 10 des Beutelmaterials einige Zentimeter über. In diesem Abschnitt sind mehrere Ösen 11 zum Aufhängen angebracht. Der überstehende Rand 10 ist von dem befüllbaren Beutel 9 durch eine Steppoder Schweißnaht 7 getrennt. Der Beutel 9 selbst ist durch Steppnähte 12 oder durch punktuelle Steppung 13 in Kammern unterteilt, die, wie bereits geschildert, zur Formstabilisierung dienen.

Der als hängende Befeuchtungseinrichtung vorgesehene Beutel 9 besteht insgesamt aus wasserdampfdurchlässigem, aber flüssigkeitsundurchlässigem Material, wie beispielsweise FEP. Zum Wiederbefüllen des Beutels weist er einen Verschluß 2 mit einer Verschlußkappe auf.

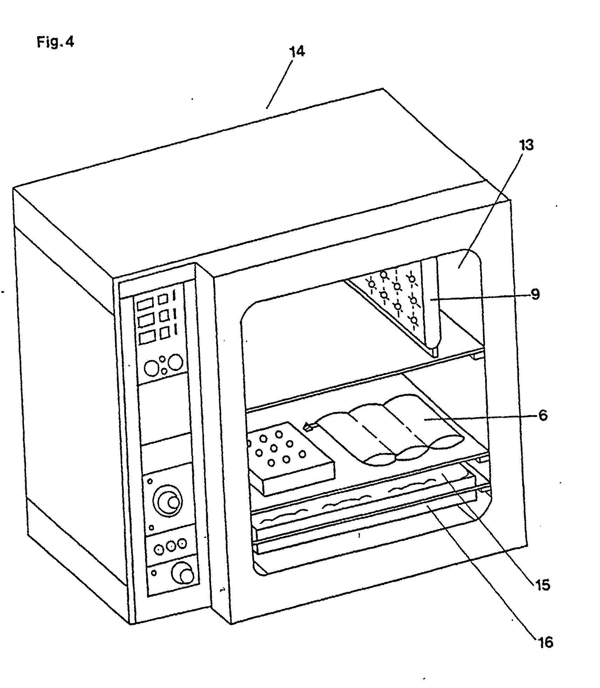

Figur 4 zeigt eine Anordnung der Befeuchtungseinrichtung im Nutzraum 13 eines Klimaschrankes 14. Die mit den Figuren 2 und 3 ausführlich geschilderten Ausführungsbeispiele eines flachen, matratzenförmigen Beutels 6 und eines aufhängbaren Beutels 9 sind an verschiedenen Stellen im Nutzraum 13 angeordnet. Im unteren Teil des Nutzraumes 13 ist ein einfacher Befeuchtungsbeutel 15 in einer Wanne 16 zu sehen, der durch seine flexible Form sich an die Wannenform anpaßt.

## Patentansprüche

1. Einrichtung zur Befeuchtung des Nutzraumes eines Klimaschrankes, wobei die Befeuchtungseinrichtung einen von wasserdichten Behälterwänden begrenzten, allseitig geschlossenen Behälter zur Aufnahme von Wasser aufweist, der mindestens teilweise aus wasserdampfdurchlässigem, aber gegenüber flüssigem Wasser dichtem Material gebildet ist, **dadurch gekennzeichnet, daß** der Behälter als flexibler, durch einen Verschluß (2) wiederbefüllbarer Beutel (1; 6; 9) ausgebildet ist, wobei mindestens der wasserdampfdurchlässige Teil des flexiblen Beutels (1; 6; 9) eine gegenüber einer glatten, unstrukturierten Oberfläche vergrößerte Oberfläche aufweist.

2. Einrichtung zur Befeuchtung nach Anspruch 1, **dadurch gekennzeichnet, daß** der Beutel (6) in einer flachen, matratzenähnlichen Form ausgebildet ist.

3. Einrichtung zur Befeuchtung nach Anspruch 1 oder 2, **dadurch gekennzeichnet, daß** gegenüberliegende Flächen des Beutels (6; 9) durch das Beutelinnere hindurch miteinander verbunden sind.

## Claims

1. A device for humidifying the useful space of a climatic cabinet, comprising a completely closed water-holding reservoir defined by watertight walls, at least part of said reservoir being made of material that is permeable to water vapor, but is impervious to liquid water, **characterized in that**
the reservoir is constructed as a flexible bag (1;6;9) which can be refilled via a closure (2), at least the water-vapor-permeable part of the flexible bag (1;6;9) having a surface area larger than that of a smooth unstructured surface.

2. The humidifying device according to claim 1, **characterized in that** the bag (6) is constructed in a flat, mattress-like form.

3. The humidifying device according to claim 1 or 2, **characterized in that** the bag (6;9) has opposite faces which are joined to each other through the inside of the bag.

## Revendications

1. Dispositif pour humidifier le volume utile d'une armoire climatique, le dispositif d'humidification présentant un récipient fermé de toutes parts, limité par des parois de récipient imperméables à l'eau, afin de recevoir de l'eau, récipient qui est formé au moins en partie d'un matériau perméable à la vapeur d'eau, mais imperméable à l'eau liquide, ***caractérisé en ce que*** le récipient est formé d'un sac (1 ; 6 ; 9) flexible pouvant être re-rempli à travers une fermeture (2), au moins la partie du sac flexible (1 ; 6 ; 9) qui est perméable à la vapeur d'eau présentant une surface augmentée par rapport à une surface lisse non structurée.

2. Dispositif d'humidification selon la Revendication 1, ***caractérisé en ce que*** le sac (6) est réalisé avec une forme plate similaire à un matelas.

3. Dispositif d'humidification selon la Revendication 1 ou 2, ***caractérisé en ce que*** des surfaces du sac (6 ; 9) en vis-à-vis sont reliées entre elles à travers l'intérieur du sac.
